# EUROPEAN PATENT APPLICATION

(11) **EP 0 353 913 A2**
(43) Date of publication of application: **07.02.1990**
(21) Application number: 89307409.6
(22) Date of filing: 20.07.1989
(51) Int. Cl.: F16J 15/32

(54) **A rotary shaft seal**

(30) Priority: 21.07.1988 GB 8817414
(71) Applicant: WOODVILLE POLYMER ENGINEERING LIMITED, Ross-on-Wye Herefordshire HR9 5NF (GB)
(72) Inventor: Gregory, Christopher, Barnwood Gloucester, GL4 7ED (GB)
(74) Representative: Hogg, Jeffery Keith

(57) **Abstract**

The seal (1) includes a first elastomeric section (3), and a second PTFE section (4), and may further include a stiffening ring (2) and/or a garter spring (5). The rotary shaft seal (1) acts in such a way that the first elastomeric section (3) and the second PTFE (4) provide the lip seal contact sealing area with a shaft about which the seal (1) is placed. The lip seal contact sealing area comprising a sealing contact between the first elastomeric section (3) and the shaft, and a sealing contact between the second PTFE section (4) and the shaft.

## Description

This invention relates to a rotary shaft seal, and in particular, a rotary shaft seal which incorporates a composite lip seal contact sealing area.

The present invention is concerned with providing a rotary shaft seal with an enhanced form of lip seal contact sealing area.

In accordance with the present invention a rotary shaft seal includes:
- a first elastomeric section;
and - a second PTFE section;

wherein the first elastomeric section and the second PTFE section provides a lip seal contact sealing area with a shaft about which the shaft seal is placed, and said lip seal contact sealing area comprises a sealing contact between the first elastomeric section and the shaft, and a sealing contact between the second PTFE section and the shaft.

A rotary shaft seal made in accordance with the present invention includes a composite lip seal contact sealing area. The sealing contact between the first elastomeric section and the shaft enhances the static sealing qualities of the seal above those of a seal in which the sealing contact is purely between PTFE and a shaft. Whilst the second PTFE enhances the rotary sealing qualities of the seal above those of a seal in which the sealing contact is purely between elastomeric material or materials and the shaft.

This effect, and in particular the enhancement of the efficiency of the sealing contact under particular conditions, can be easily explained by the physical qualities of the materials involved. The elastomeric material of the first elastomeric section provides a more adhesive contact with the shaft than PTFE, hence improving the static sealing qualities. Whilst, for synonymous reasons the PTFE provides a more free running quality, which reduces dynamic distortion of the sealing contact area, hence improving the rotary shaft sealing qualities of the seal during rotation of the shaft.

Preferably, the lip seal contact sealing areas are between the first elastomeric section and the shaft and the second PTFE section and the shaft is formed as a single composite lip seal contact sealing area.

Alternatively, the lip seal contact sealing areas between the first elastomeric section and the shaft, and the second PTFE section and the shaft are formed as separate lip seal sealing contact areas, which in combination provide a composite lip seal contact sealing area.

This type of rotary shaft seal may be used in conjunction with any one of the environments presently encountered by rotary shaft seals for example, in water pumps, general purpose pumps, hydraulic pumps or hydraulic motors. Most of the typically encountered environments involve sealing grease/oil from air, therefore the rotary shaft seal has a designated air side, that is in contact with the air, and a designated oil side, that is in contact with the grease/oil.

Preferably, the second PTFE section lip seal contact sealing area is provided on the air side of the shaft seal.

The first elastomeric section may be formed from any of the elastomeric materials previously used in rotary shaft seals. The actual choice of material is dictated by the actual sealing criteria encountered, or to be encountered.

In known forms of composite lip seals the two materials which form the lip sealing contact are both elastomeric materials which have different hardness or modulus values.

However, with elastomeric materials, the range of the hardness or modulus differential available is very limited, i.e. within the Shore 'A' Range.

In accordance with the present invention by using PTFE a much wider differential of hardness or modulus between the individual lip sealing contact areas is provided and, the properties utilised in composite lip seals are significantly enhanced.

Primarily, this is because PTFE is essentially a plastic and therefore, has a hardness which is very much greater than the maximum possible for an elastomeric material. When this is combined with the fact that when PTFE is moulded and bonded as a thin film to a softer elastomeric material, the effects of the hardness differential are present without the loss of flexibility of the seal.

A shaft seal made in accordance with the present invention will generally include a stiffening ring. This stiffening may be manufactured from metal or any suitable plastics materials.

A seal made in accordance with the present invention may incorporate any of the conventionally used sealing aids, for example, flingers, protection elements or dust lips, and hydrodynamic pumping devices.

A garter spring may be incorporated in the shaft seal in order to enhance the efficiency of the lip seal contact sealing area.

A shaft seal may be provided with a unitising member which is placed about a shaft with which the shaft seal is to provide a lip sealing contact with.

This invention also includes a method of manufacturing rotary shaft seals made in accordance with the present invention, which method comprises:
- preshaping and forming the second PTFE section;
- positioning the second PTFE section in a mould; and - injection moulding the first elastomeric section.

In this way the first elastomeric section and the second PTFE section may be bonded to one another.

In shaft seals which incorporate garter springs and/or a stiffening ring, the method of manufacture preferably comprises:
- preshaping and forming the stiffening ring and the second PTFE section;
- positioning the second PTFE section and stiffening ring and/or garter spring in a mould;
and - injection moulding the first elastomeric section thereabouts.

In the way the shaft seal may be held together as a single unitary member.

The invention will now be illustrated, by way of description, of examples, with reference to the accompanying drawings, in which:
Figure 1 shows a partial cross-section of a first type of shaft seal in accordance with the present invention;
Figure 2 shows a partial cross-section of a second type of shaft seal in accordance with the present invention;
Figure 3 shows a partial cross-section of a third type of shaft seal in accordance with the present invention;
Figure 4 shows a partial cross-section of a fourth type of shaft seal in accordance with the present invention;
Figure 5 shows a partial cross-section of a fifth type of shaft seal in accordance with the present invention;
and Figure 6 shows a partial cross-section of a sixth type of shaft seal in accordance with the present invention.

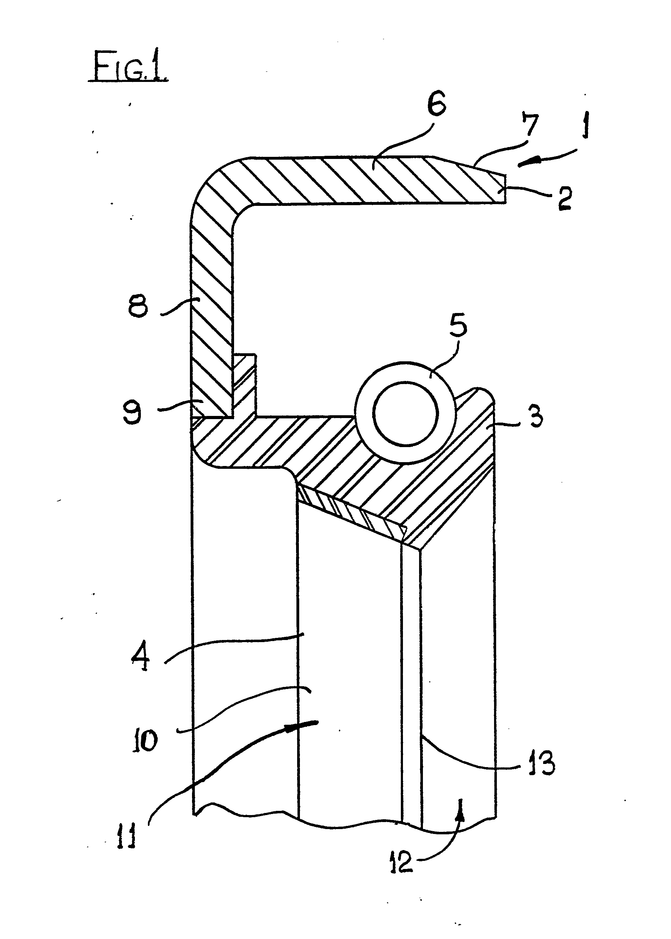

Now referring to Figure 1 of the drawings, a first type of shaft seal 1 made in accordance with the present invention comprises:
- a stiffening ring 2;
- a base elastomeric section 3;
- a PTFE lining section 4;
and - a garter spring 5.

The stiffening ring 2 is of generally L-shaped configuration and has a first arm 6 with a chamfered end section 7, and a second arm 8. This stiffening may be made from metal or a suitable plastics material.

The chamfered end section 7 assists with the mounting of the shaft seal 1 in a body, for example, water pump, hydraulic pump or hydraulic motor, about a shaft.

The base elastomeric section 3 is formed so that it:
- is connected to an end 9 of the second arm 8 of the stiffening ring 2;
- is in contact with the garter spring 5;
and - is bonded to the PTFE lining section 4.

The PTFE lining section 4 is conical in shape, with an internal surface 10.

The base elastomeric section 3 and the PTFE lining section 3 and the PTFE lining section 4, in conjunction, are shaped so as to form a V-shaped internal surface, i.e. the surface in contact with, or closest to a shaft about which the shaft seal 1 is placed, having surfaces 11 and 12 with an apex 13.

With this particular arrangement of the PTFE lining section 4 and the base elastomeric section 3 the area around the apex 13, i.e. on both sides thereof, is formed from the base elastomeric section 3. However, when the shaft seal 1 is positioned around the shaft the shaft seal 1 in the area around the apex is distorted so that a sealing contact area is provided between the base elastomeric section 3 and the shaft and the internal surface 10 of the PTFE lining section 4 and the shaft. In this way a composite sealing lip contact area is provided with the shaft.

The shaft seal may be formed with the particular V-shaped internal surface as a single manufacturing operation, for example, by moulding into that particular shape or alternatively a second operation i.e. trimming may be employed.

In operation the sealing contact with the base elastomeric section 3 provides an efficient static sealing area, whilst the sealing area, whilst the sealing contact with the PTFE lining section 4 provides an efficient rotary sealing contact area.

The garter spring 5 acts against the reverse side of the base elastomeric section 3 so as to enhance the efficiency of the sealing contact of the lip sealing area.

The shaft seal 1 is manufactured by a method which comprises:
- preshaping and forming the PTFE lining section 4 and the stiffening ring 2;
- positioning the PTFE lining section 4, the stiffening ring 2 correctly in a mould;
and - injection moulding the base elastomeric section 3 thereabouts.

In this way the base elastomeric section 3 is formed so that it is connected to the end 9 of the second arm 8 of the stiffening ring 2, the garter spring 5 and is bonded to the PTFE lining section 4, so that the shaft seal 1 is formed into a unitary member.

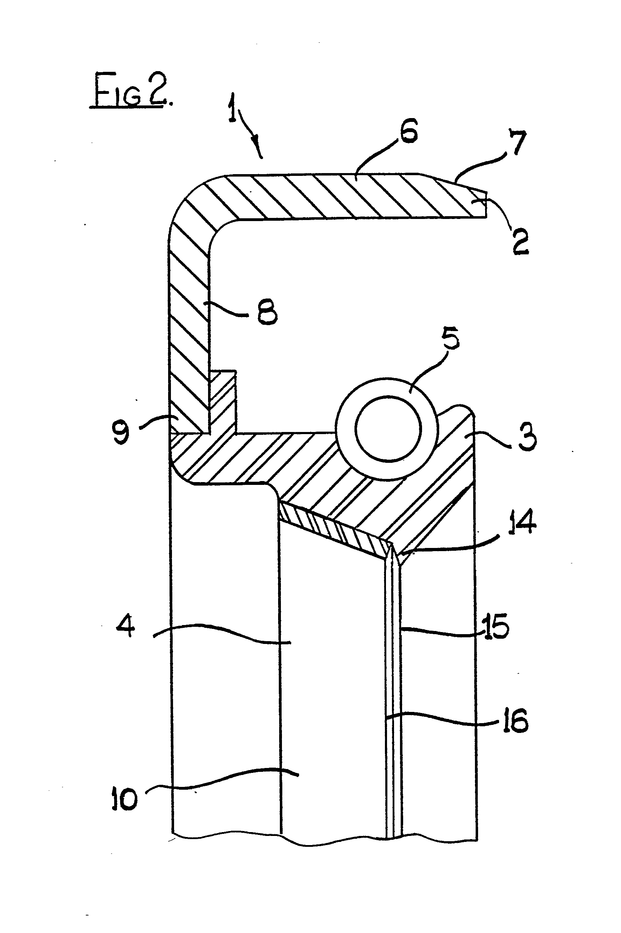

Now referring to Figure 2 of the drawings, a second type of shaft seal 1 is shown, this shaft seal 1 is similar to that shown in Figure 1 and like numerals have been used to denote like components.

The differences between the two types of shaft seal 1 stem from the shape of the internal surface of the seal, in particular, in the vicinity of the area which will form the lip sealing contact area when positioned around a shaft.

With this particular arrangement, the shaft seal 1 is shaped so that the internal surface 10 of the PTFE lining section 4 forms a first surface, and the base elastomeric section 3 forms a second surface and has a protrusion 14 separate from, but in the vicinity of the PTFE lining section 4. The protrusion has an apex 15.

The overall shape of this internal surface is, however, of a general V-shape.

In operation, when placed about a shaft the shaft seal is deformed so that a sealing contact is formed between the protrusion 14 of the base elastomeric section 3 and the shaft, and end 16 and face 10 of the PTFE lining section 4 and the shaft. In this way a composite lip sealing contact is formed between the shaft seal and the shaft.

The lip sealing contacts of the shaft seal 1 with the shaft may be either independent from one another or such that they form a singular lip sealing contact area. This is all dependent upon the dimensions of the seal and the shaft about which it is placed, and, in particular, upon the separation between the apex 15 of protrusion 14 of the base elastomeric section 3 and the end 16 of the PTFE lining section 4.

The method of manufacture of this shaft seal 1 is identical to that of the shaft seal 1. described with reference to the embodiment of Figure 1 of the drawings both shaft seals being moulded in a single operation.

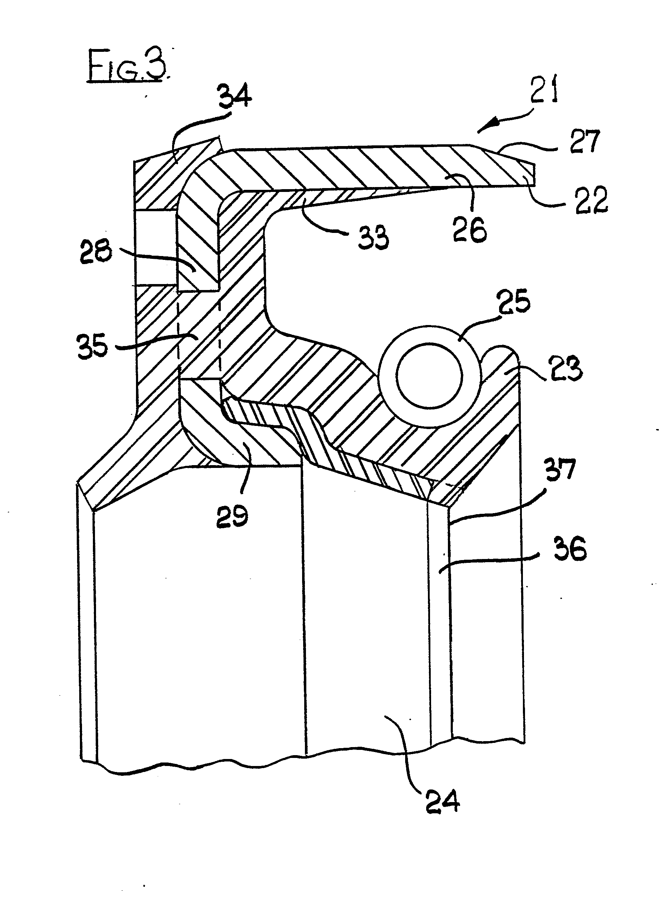

Now referring to Figure 3 of the drawings, a third type of shaft seal is shown, this particular shaft seal is adapted for use in a high pressure differential situation.

This type of shaft seal 21 comprises:
- a stiffening ring 22;
- a base elastomeric section 23;
- a PTFE lining section 24;
and - a garter spring 25.

The stiffening ring 22 is of generally L-shaped configuration and is made from metal or a suitable plastic material and includes a first arm 26 having a chamfered section 27, and a second arm 28 having an upturned end section 29.

The PTFE lining section 24 is generally tapered in shape having an internal surface 31 and is arranged in the shaft seal so that an end 30 thereof is in contact with the internal surface 32 of the upturned end section 29.

The base elastomeric section 23 is formed so that it is in contact with the second arm 28, and via a circumferentially extending finger 33 with the first arm 26 and the garter spring 25. The base elastomeric section 23 is bonded to the PTFE lining section 24.

Further, the base elastomeric section 24 is formed with a mounting protection element 34 on the outside surface of the stiffening ring, and is connected to the main body of the base elastomeric section 23 via a series of holes 35 provided in the second arm 28 of the stiffening ring 22.

The base elastomeric section 23 in conjunction with the PTFE lining section 24, provides the shaft seal 21 with an internal surface 36 of V- shaped configuration and having an apex 37.

The provision of the shaft seal 21 with the chamfered section 27 on the first arm 26 of the stiffening ring 22, and the protection element 34 assists with the mounting of the shaft seal 21 in a body, for example, water pump, hydraulic pump or hydraulic motor, as well as protecting the shaft seal 21 from any damage which may occur during such an operation. Further, the protection element 34 is deformed when mounted in a body, so that an improved sealing contact is provided around the shaft seal mounting in the body.

The PTFE lining section 24 is stopped short of the apex 37, so that the areas immediately adjacent to the apex 37, i.e. on both sides thereof, is formed by the base elastomeric section 23.

When the shaft seal 21 is mounted in the body of a pump or motor about a shaft, the shaft seal 21 is deformed in the area of the apex so that a lip sealing contact is provided between the base elastomeric section 23 and the shaft, as well as the PTFE lining section 24 and the shaft.

The garter spring 25 acts against the reverse side of the base elastomeric section 23, so that it enhances the efficiency of the lip sealing contact between the shaft seal 21 and the shaft.

The method of manufacture of this type of shaft seal 21 is essentially identical to that described with reference to the shaft seal 1 shown in Figure 1 of the drawings.

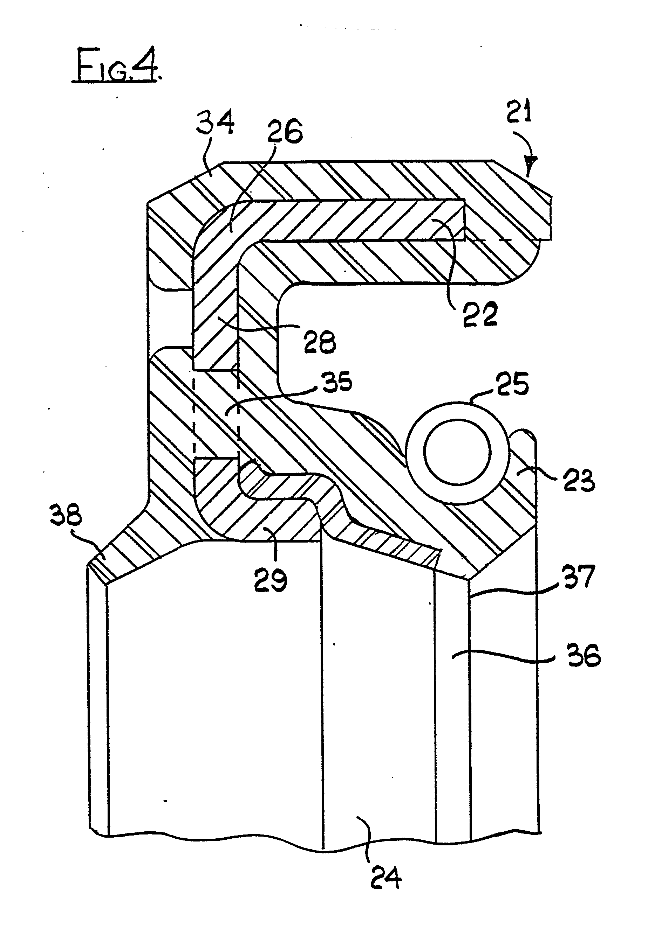

Now referring to Figure 4 of the drawings, a fourth type of shaft seal is shown, as with the shaft seal 21 this is a shaft seal suited for operation in high pressure differential environments. The shaft seal illustrated in Figure 4 is essentially identical to that shown in Figure 3 and like numerals have been used to denote like components.

The only difference between the shaft seal 21 shown in Figure 3; and the shaft seal 21 shown in Figure 4 results from the protection element 34 being extended so as to include a dust lip 38.

The method of manufacture of this type of shaft seal 21 is essentially identical to that described with reference to the shaft seal 1 shown in Figure 1 of the drawings.

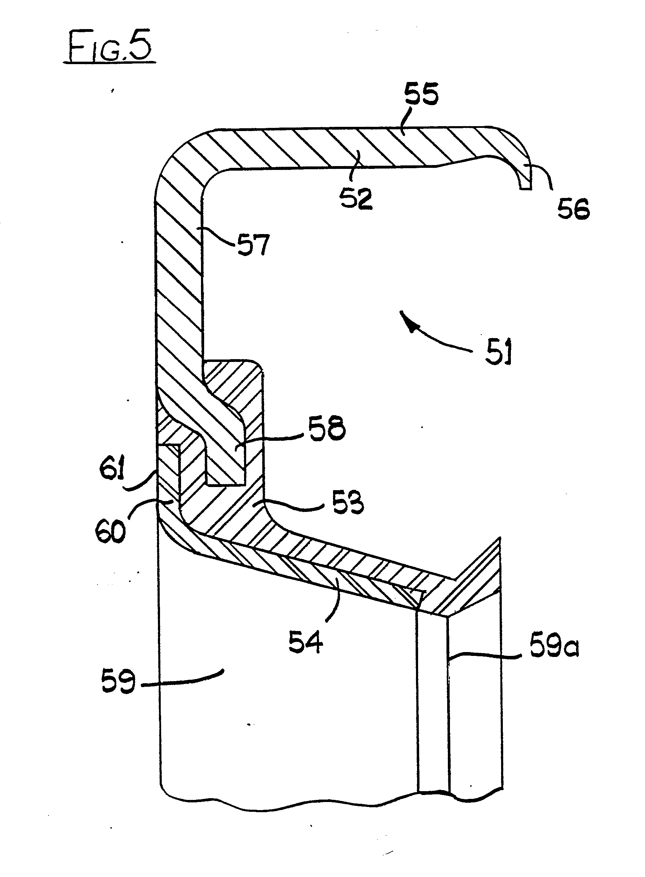

Now referring to Figure 5 of the drawings, a fifth type of shaft seal is shown. This type of shaft seal is of simpler design than those previously described, and is therefore cheaper to produce.

The shaft seal 51 shown in Figure 5 of the drawings comprises:
- a stiffening ring 52;
- a base elastomeric section 53;
and - a PTFE lining section 54.

The stiffening ring 52 is made from metal or a suitable plastic material and includes a first arm 55 having a hook shaped section 56 of reduced thickness at one end thereof, and a second arm 57 having a kinked end section 58 at on end thereof.

The PTFE lining section 54 is of tapered section having an internal surface 59 and has a skirt 60 formed at one end thereof. The skirt 60, a section 61 of the base elastomeric section 53 and the outer surface of the arm 57 form a flush surface.

The base elastomeric section 53 is formed so that it encapsulates and is bonded to the kinked end section 58, and is bonded to the PTFE lining section 54.

The base elastomeric section 53 in conjunction with the PTFE lining section 54 provides the shaft seal with an internal surface having a V-shaped cross-section, and an apex 59. The area in the vicinity of the apex 59 i.e. on both sides thereof, being formed by the base elastomeric section 53.

When mounted in a body, for example, a water pump, hydraulic pump or hydraulic motor, about a shaft the shaft seal in the vicinity of the apex 59 is deformed so that a lip sealing contact is formed between the base elastomeric section 53 and the shaft and the PTFE lining section 54 and the shaft.

The shaft seal 51 is manufactured by a method as described with respect to shaft seal 1 shown in Figure 1 of the drawings.

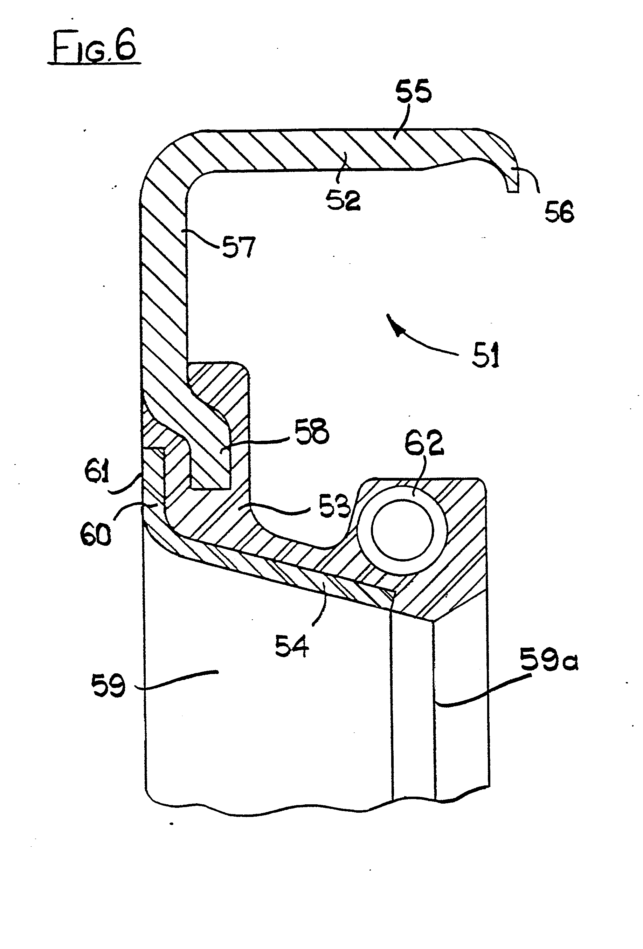

Now referring to Figure 6 of the drawings, a sixth type of shaft seal is shown, this shaft seal is essentially identical to that shown in Figure 5 and like numerals have been used to denote like components.

The only difference between the shaft seal 51 shown in Figure 5 and the shaft seal 51 shown in Figure 6 resides in the fact that this shaft seal is provided with a garter spring 62 encapsulated in the base elastomeric section 53.

The garter spring 62 acts against the base elastomeric section 53, so that it enhances the efficiency of the lip sealing contact with the shaft.

The shaft seal 51 is manufactured by a method as described with respect to shaft seal 1 shown in Figure 1 of the drawings.

## Claims

1. A rotary shaft seal which include:
- a first elastomeric section;
and - a second PTFE section;
wherein the first elastomeric section and the second PTFE section provides a lip seal contact sealing area with a shaft about which the shaft seal is placed, and said lip seal contact sealing area comprises a sealing contact between the first elastomeric section and the shaft, and a sealing contact between the second PTFE section and the shaft.

2. A rotary shaft seal as claimed in claim 1, wherein the lip seal contact sealing areas are between the first elastomeric section and the shaft and the second PTFE section and the shaft is formed as a single composite lip seal contact sealing area.

3. A rotary shaft seal as claimed in claim 1, wherein the lip seal contact sealing areas between the first elastomeric section and the shaft, and the second PTFE section and the shaft are formed as separate lip seal sealing contact areas, which in combination provide a composite lip seal contact sealing area.

4. A rotary shaft seal as claimed in any one of claims 1 to 3, wherein the second PTFE section lip seal contact sealing area is provided on the air side of the shaft seal.

5. A method of manufacturing a rotary shaft seal, as claimed in one of the preceding claims which, method comprises:
- preshaping and forming the second PTFE section;
- positioning the second PTFE section in a mould;
and - injection moulding the first elastomeric section.

6. A method of manufacturing a rotary shaft seal as claimed in any one of the preceding claims wherein the rotary shaft seal further includes a garter spring and/or a stiffening ring, which method comprises:
- preshaping and forming the stiffening ring and the second PTFE section;
- positioning the second PTFE section and stiffening ring and/or garter spring in a mould;
and - injection moulding the first elastomeric section thereabouts.
